# FASCICULE DE BREVET EUROPEEN

(11) **EP 0 857 427 B1**
(45) Date de publication et mention de la délivrance du brevet: **02.05.2002**
(21) Numéro de dépôt: 98102202.3
(22) Date de dépôt: 09.02.1998
(51) Int. Cl.: A23L 1/00, A23L 1/10, A23L 1/305, A23L 1/09, A23C 9/20, A23J 3/34

(54) **Poudre utilisable pour la préparation d'une bouillie hypoallergénique**
FÜR DIE ZUBEREITUNG EINES HYPOALLERGENISCHEN BREIES VERWENDBARES PULVER
Powdered product which can be used to prepare an hypoallergenic porridge

(30) Priorité: 10.02.1997 EP 97200377
(43) Date de publication de la demande: 12.08.1998
(73) Titulaire: SOCIETE DES PRODUITS NESTLE S.A., 1800 Vevey (CH)
(72) Inventeur: Montagne, Dirk H., 3506 Grosshöchstetten (CH)
(74) Mandataire: Thomas, Alain

(56) Documents cités:
- EP-A- 0 321 603
- EP-A- 0 611 261

## Description

L'invention concerne une poudre utilisable pour la préparation d'une bouillie hypoallergénique.

Il est connu dans l'état de la technique que certaines protéines du petit lait comme l'α-lactalbumine et surtout la β-lactoglobuline sont allergéniques. Il existe sur le marché des laits hypoallergénique, c'est-à-dire dans lesquels on a dégradé les protéines mentionnées ci-dessus. Par contre, il n'existe pas sur le marché une poudre de lait hypoallergénique avec laquelle il serait possible de préparer une bouillie hypoallergénique. Ce qui existe sur le marché, c'est une composition en poudre utilisable pour faire des biberons de produit hypoallergénique. Dans ce cas, la poudre contient un forte proportion de maltodextrine donnant un fort apport calorique, mais elle ne contient pas suffisamment d'amidon pour donner une bonne texture et une viscosité satisfaisante, en relation avec celle que l'on attend normalement d'une bouillie. Le brevet EP 611'261 concerne une poudre hypoallergénique contenant des protéines de viande hydrolysées, mais aussi de l'amidon de riz contenant trop de protéines allergènes.

Le but de la présente invention est de mettre au point une poudre utilisable pour préparer une bouillie hypoallergénique, permettant d'avoir une bonne texture et une bonne viscosité lors de la reconstitution avec l'eau, et avec laquelle on minimise l'apport de protéines allergéniques.

L'invention concerne une poudre utilisable pour la préparation d'une bouillie hypoallergénique comprenant un mélange de différents ingrédients en poudre et ayant une composition telle qu'elle comprend entre 8 et 15 % de protéines, entre 10 et 15 % de graisse, entre 10 et 30 % de maltodextrine, entre 10 et 30 % de sucre, au moins 5 % d'amidon partiellement prégélatinisé, au moins 5 % d'amidon prégélatinisé.

La poudre selon l'invention peut également contenir des vitamines, des sels minéraux et des arômes. La teneur globale dans ces 3 composants est de l'ordre de 1 %.

Le terme allergénique est à comprendre comme "protéine ou macropeptide susceptible de déclencher des réactions allergiques chez des sujets, notamment des petits enfants ou des nourissons sensibles ". On considère qu'une bouillie est hypoallergénique lorsqu'on ne peut plus déceler la présence de protéines ou de gros fragments ou macropeptides de poids moléculaire supérieur à environ 10000 provenant du lait par les méthodes analytiques habituelles, par exemple par chromatographie liquide haute performance (HPLC), par electrophorèse de zone en gel de polyacrylamide (SDS-PAGE) ou, lorsque ces méthodes ne permettent plus de mettre en évidence des antigènes protéiques ou macropeptidiques, par des méthodes immunologiques, par exemple par double immunodiffusion (ID). Dans la présente description tous les pourcentages sont donnés en poids.

Les protéines présentes dans la poudre selon l'invention sont principalement apportées par de la poudre de lait hypoallergénique, la poudre de soja ou autre. La teneur en protéines est de préférence comprise entre 10 et 12 %. La teneur en graisse de la poudre est également apportée par le lait hypoallergénique. On peut également rajouter de la graisse, par exemple de la graisse végétale.

Par lait hypoallergénique, on entend du lait entier ou partiellement ou totalement écrémé, ainsi que de la poudre de lait entier, partiellement ou totalement écrémé. On peut également utiliser de la poudre de petit lait ou de la poudre de caséine. On utilise de préférence du petit lait déminéralisé hydrolysé par une protéinase (par exemple trypsine, pancréatine et autres) et standardisé avec de la maltodextrine, graisse végétale et sels minéraux et séché par atomisation. On peut par exemple considérer le produit obtenu par le procédé, objet du brevet EP 322'589 au nom de la demanderesse. Ce produit peut être soit sous la forme de poudre à base de sérum doux, soit à base de sérum acide.

La maltodextrine provient pour partie de la poudre de lait hypoallergénique et pour partie d'une addition sous forme de maltodextrine en poudre. Elle sert surtout pour un apport calorique, de même que le sucre. L'apport de sucre dans la poudre selon l'invention provient également pour partie du lait hypoallergénique contenant du lactose et pour partie d'une addition de glucose et de sucrose.

Les amidons présents dans le mélange sont surtout importants, car l'amidon partiellement prégélatinisé permet de donner une bonne texture en bouche et l'amidon prégélatinisé donne la viscosité d'une bouillie. Si on en met en quantité insuffisante, on n'arrive pas à la texture et à la viscosité souhaitée et si on en ajoute en quantité trop grande, on prépare une bouillie qui est trop collante s'agissant du premier amidon cité et une bouillie trop épaisse s'agissant du second amidon. Comme premier amidon, on prend de préférence l'amidon de tapioca et comme second amidon l'amidon de pomme de terre.

Il faut en tout cas pour les deux amidons qu'ils soient prégélatinisés, de manière à ce que lors de la reconstitution dans l'eau, on arrive sans chauffage à la texture et à la viscosité adéquate. Ces produits sont disponibles sur le marché.

On peut également utiliser d'autres amidons partiellement prégélatinisés ou prégélatinisés, comme l'amidon de riz ou de maïs. Dans ce cas, il faut d'abord faire une hydrolyse partielle de ces amidons de manière à dégrader les protéines allergéniques qu'ils contiennent.

Les poudres utilisées dans le mélange n'ont pas de granulométrie critique. Elles ont de préférence une granulométrie comprise entre 0,1 et 0,4 mm.

Dans une forme de réalisation préférée, la poudre selon l'invention comprend environ 10 à 12 % de protéines, environ 10 à 14 % de graisse, environ 22 % de maltodextrine, environ 22 % de sucre, entre 10 et 14 % d'amidon partiellement prégélatinisé, entre 10 et 14 % d'amidon prégélatinisé ainsi que des arômes, des vitamines et des sels minéraux.

Pour préparer la poudre selon l'invention, on effectue un mélange à sec de tous les ingédients dans un mélangeur connu à une température proche de la température ambiante, on fait un gazage du mélange sous azote et on met en sachets.

Lors de la reconstitution dans l'eau, on dissout la poudre selon l'invention dans de l'eau à une température comprise entre 55 et 60 °C, de manière à obtenir une bouillie ayant une teneur en matière sèche comprise entre 22 et 30 %, de préférence de l'ordre de 26 %. A cette teneur en matière sèche de 26 %, on arrive à une viscosité de la bouillie de l'ordre de 2500 mPas. Cette viscosité a été mesurée à 25 °C avec un taux de cisaillement de 50 sec-1 et sur un appareil HAAKE RS 100/Cone plate.

La suite de la description est faite en référence aux exemples.

### Exemple 1

On effectue un mélange à sec de 51 % de poudre de petit lait hypoallergénique avec 10,3 % de maltodextrine, 12 % de lactose, 11,5 % d'amidon de tapioca partiellement prégélatinisé, 12,5 % d'amidon de pomme de terre prégélatinisé, 0,04 % de pyrophosphate de fer et 0,1 % de vitamines : on arrive à une poudre de base ayant une teneur en eau de 2,56 %. La poudre de lait hypoallergénique utilisée a la composition suivante : 20 % de protéines, 22,6 % de graisse, 27 % de maltodextrine, 24 % de lactose, 3 % de cendres et 3 % d'humidité.

On prépare une bouillie pour arriver à une teneur en matière sèche de 26 %. La bouillie ainsi préparée a une viscosité analogue à celle d'une bouillie normale pour bébés.

### Exemples 2 à 4

On utilise 97 % de la poudre préparée ci-dessus et on y ajoute 0,5 % d'arôme de banane.

On utilise 96,5 % de la poudre préparée ci-dessus et on y ajoute 1 % d'arômes de poire.

Finalement, on prépare une dernière poudre à partir de 96,7 % du mélange ci-dessus avec 0.7 % d'arôme de vanille. Dans les 3 cas, on obtient des bouillies très appétissantes avec de bonnes viscosités et textures.

### Exemple 5

On prépare un mélange à sec de 51 % de petit lait hypoallergénique avec 14,3 % de maltodextrine, 8 % de sucrose, 11,5 % d'amidon de tapioca partiellement prégélatinisé, 12,5 % d'amidon de pomme de terre prégélatinisé, 0,04 % de pyrophosphate de fer et 0,1 % de vitamines ayant ainsi une teneur en eau de 2,56 %. Le petit lait hypoallergénique utilisé est le même que celui de l'exemple 1.

On reconstitue 56 g de poudre ci-dessus avec 150 g d'eau à 50 °C.

### Exemples 6 à 8

On fait comme pour les exemples 2 à 4, on prend la poudre de l'exemple 5 dans la même proportion et on y ajoute les différents arômes ci-dessus également dans les mêmes proportions.

## Revendications

1. Poudre utilisable pour la préparation d'une bouillie hypoallergénique comprenant un mélange de différents ingrédients en poudre et ayant une composition telle qu'elle comprend entre 8 et 15 % de protéines, entre 10 et 15 % de graisse, entre 10 et 30 % de maltodextrine, entre 10 et 30 % de sucre, au moins 5 % d'amidon partiellement prégélatinisé et au moins 5 % d'amidon prégélatinisé.

2. Poudre selon la revendication 1, **caractérisée en ce qu'**elle comprend 10 à 12 % de protéines, 10 à 14 % de graisse, 22 % de maltodextrine, 22 % de sucre, entre 10 et 14 % d'amidon partiellement prégélatinisé, entre 10 et 14 % d'amidon prégélatinisé ainsi que des arômes, des vitamines et des sels minéraux.

3. Poudre selon l'une des revendications 1 ou 2, **caractérisée en ce que** le sucre est choisi dans le groupe constitué par le glucose, le lactose et le sucrose.

4. Poudre selon l'une des revendications 1 à 3, **caractérisée en ce que** l'amidon partiellement prégélatinisé est l'amidon de tapioca.

5. Poudre selon l'une des revendications 1 à 4, **caractérisée en ce que** l'amidon prégélatinisé est l'amidon de pomme de terre.

## Claims

1. Powder that can be used for the preparation of a hypoallergenic porridge comprising a mixture of different powdered ingredients and having a composition such that it comprises between 8 and 15 % proteins, between 10 and 15 % fats, between 10 and 30 % maltodextrin, between 10 and 30 % sugar, at least 5 % partially pregelatinized starch and at least 5 % pregelatinized starch.

2. Powder according to claim 1, **characterized in that** it comprises 10 to 12 % proteins, 10 to 14 % fats, 22 % maltodextrin, 22 % sugar, between 10 and 14 % partially pregelatinized starch, and between 10 and 14 % pregelatinized starch as well as flavourings, vitamins and inorganic salts.

3. Powder according to either of claims 1 or 2, **characterized in that** the sugar is chosen from the group consisting of glucose, lactose and sucrose.

4. Powder according to one of claims 1 to 3, **characterized in that** the partially pregelatinized starch is tapioca starch.

5. Powder according to one of claims 1 to 4, **characterized in that** the pregelatinized starch is potato starch.

## Patentansprüche

1. Für die Herstellung eines hypoallergenen Breis verwendbares Pulver, das aus einer Mischung von verschiedenen Zutaten in Pulverform besteht und eine solche Zusammensetzung besitzt, dass es zwischen 8 und 15% Proteine, zwischen 10 und 15% Fett, zwischen 10 und 30% Maltodextrin, zwischen 10 und 30% Zucker, mindestens 5% partiell vorgelierte Stärke und mindestens 5% vorgelierte Stärke enthält.

2. Pulver nach Anspruch 1, **dadurch gekennzeichnet, dass** es 10 bis 12% Proteine, 10 bis 14% Fett, 22% Maltodextrin, 22% Zukker, zwischen 10 und 14% partiell vorgelierte Stärke, zwischen 10 und 14% vorgelierte Stärke sowie Aromastoffe, Vitamine und Mineralsalze enthält.

3. Pulver nach einem der Ansprüche 1 oder 2, **dadurch gekennzeichnet, dass** der Zucker aus der aus Glucose, Lactose und Saccharose bestehenden Gruppe ausgewählt ist.

4. Pulver nach einem der Ansprüche 1 bis 3, **dadurch gekennzeichnet, dass** die partiell vorgelierte Stärke Tapiokastärke ist.

5. Pulver nach einem der Ansprüche 1 bis 4, **dadurch gekennzeichnet, dass** die vorgelierte Stärke Kartoffelstärke ist.
